# EUROPEAN PATENT APPLICATION

(11) **EP 1 000 916 A1**
(43) Date of publication of application: **17.05.2000**
(21) Application number: 99917220.8
(22) Date of filing: 28.04.1999
(51) Int. Cl.: C06D 5/00, C06B 29/22, B60R 21/26

(54) **ENHANCER COMPOSITION FOR INFLATOR**

(30) Priority: 30.04.1998 JP 12020798
(71) Applicant: Daicel Chemical Industries, Ltd., Osaka 590-8501 (JP)
(72) Inventor: YAMATO, Yo, Himeji-shi, Hyogo 671-1234 (JP)
(74) Representative: Grünecker, Kinkeldey, Stockmair & Schwanhäusser Anwaltssozietät
(86) International application number: JP9902289
(87) International publication number: WO9957083

(57) **Abstract**

An enhancer composition for an inflator, excellent in combustibility and moreover, capable of reducing an amount of a mist.

An enhancer composition for an inflator containing at least one nitrogen-containing compound selected from the group consisting of guanidine derivatives, tetrazole derivatives, bitetrazole derivatives, azodicarbonamide, trihydrazinotriazine, carbohydrazide complexes, hydrazine complexes, oxalylhydrazide or its complexes, and dicyanamide salts.

## Description

### TECHNICAL FIELD WHICH THE PRESENT INVENTION BELONGS

This invention relates to an enhancer composition for an inflator for igniting a gas generating agent in an inflator of an air bag system installed in automobiles, airplanes, etc, for protecting human bodies.

### PRIOR ART

An existing inflator system includes a gas generator. referred as an "inflator". This inflator contains a gas generating agent which generates a gas upon combustion and is ignited by a detonator or a squib. Non-ignition or ignition lag of the gas generating agent, if any, fails to ensure performance required for the inflator system. A igniting agent referred to an "enhancer" or a "booster" is used generally to eliminate such problems. B/KNO₃ is known as the enhancer for the inflator (e.g. JP-A 2-63951).

Since B/KNO₃ has a high combustion temperature and large heat content, this compound has excellent performance as the enhancer and has often been used as a igniting agent for the inflator and a rocket motor. However, it generates only a limited quantity of gas and almost all remain as a combustion residue. The combustion residue has a low melting point, a low boiling point and a low decomposition temperature. (For instance, boron oxide has a melting point of 450°C and a boiling point of approximately 1,500°C and potassium oxide has a decomposition temperature of 350 to 400°C). When this enhancer is applied to the inflator, there is strong possibility that the combustion residue is discharged as a mist (particulates) outside the inflator.

One of the requirements on the inflator used for the inflator system is to decrease an amount of mist discharged outside the inflator. If the amount of the mist is large, the heat particulates contained in the mist puncture the air bag and scatter, or stimulate offensively to the trachea of passengers, or disturb their view after the activation of the system. In other words, the mist exerts adverse influences on the health of the passengers and safety of their driving performance. From the aspect of the cost, B/KNO₃ is extremely expensive such as ¥20,000 to 30,000 per kg. The cost can be reduced if it can be replaced by more economical material. Nonetheless, B/KNO₃ has gained a versatile application at present because no substitution has yet been known.

### DISCLOSURE OF THE INVENTION

It is an object of the present invention to provide an enhancer composition for an inflator that can improve safety by decreasing the amount of the generated mist and can also reduce the production cost, and a composition of such an enhancer.

It is another object of the present invention to provide an inflator or an air bag system, each using the enhancer and its composition for an inflator.

As long as B/KNO₃ is used as the enhancer for the inflator, it is unavoidable that boron compounds such as boron oxide and potassium compounds such as potassium oxide are discharged outside the inflator. As a result of intensive studies, however, the inventor of the present invention has discovered that a group of compounds as the enhancer that contain absolutely no boron, less KNO₃ than B/KNO₃, with a high combustion temperature, great heat content and a small amount of the generated combustion residue, in addition to a reduced production cost. The inventor has thus completed the present invention.

Namely, the present invention provides an enhancer for an inflator, characterized in that it contains a nitrogen-containing compound, and provides also its composition. The composition may contain an oxidizing agent, a binder and a slag-forming agent.

Further, the present invention provides an inflator system using the enhancer composition for an inflator described above.

The present invention provides further a gas generator including the enhancer or the enhancer composition described above. The present invention provides also an air bag system including said gas generator, an impact sensor, control means for inputting a sensing signal and outputting an operation signal to a ignition means for the gas generator, and an air bag. Furthermore, the present invention provides the field of application using the enhancer for a gas generator for an air bag, and a method of igniting the gas generating agent in the gas generator by an enhancer.

The enhancer or the enhancer composition is contained is a igntion means, and is loaded to the front surface of a squib, an igniter or an electric detonator. The enhancer also functions as a booster, an igniting agent, a transfer charge and an automatic ignition material.

The gas generator (inflator) generally includes the ignition means and the gas generating agent. It may further include a coolant/filter. The gas generators are generally fitted to a driver side and passenger sides in vehicles, and include a one-cylinder type or a two-cylinder type.

The enhancer may be loaded into an aluminum container or a plastic container and placed the loaded container inside the gas generator, or may be loaded into the gas generator as it is.

The enhancer composition for the inflator according to the present invention has excellent combustibility, produces only a small amount of combustion residues, and can therefore decrease the amount of the mist. Therefore, this enhancer composition does not exert adverse influences on the health of the passengers and on their driving performance, and the inflator using this enhancer composition can improve reliability. The enhancer composition is more economical than B/KNO₃. When both of the gas generating agent and the enhancer are manufactured with the same composition, the production cost can be reduced.

### PREFERRED EMBODIMENT OF THE PRESENT INVENTION

Nitrogen-containing compounds to be used in the present invention have preferably a nitrogen content of at least 40 wt%, on the basis of the sum of C, H and N in the molecules, and particularly preferably at least 45 wt%. Such a nitrogen-containing compound is at least one member selected from the group consisting of guanidine derivatives such as nitroguanidine (NQ), dicyandiamide (DCDA) and triaminoguanidine nitrate (TAGN); tetrazole derivatives such as 5-aminotetrazole (5-AT); bitetrazole derivatives such as diammonium salt of bitetrazole; and azodicarbonamide (ADCA), trihydrazinotriazine (THT), carbohydrazide (CDH) complex, hydrazine complex, and oxalylhydrazide or its complex, and dicyanamide salts such as sodium dicyanamide. These nitrogen-containing compounds are preferred because they exhibit excellent combustion performance when used either alone or in mixture with an oxidizing agent, have relatively high energy, are readily available and economical, and have low toxicity.

Among the nitrogen-containing compounds described above, particularly preferred are nitroguanidine, dicyandiamide, 5-aminotetrazole, diammonium salt of bitetrazole, trihydrazinotriazine and carbohydrazide complex [Sr(NO₃)₂(CDH)].

The content of the nitrogen-containing compound in the composition varies with the numbers of the carbon atoms, the hydrogen atoms and other elements to be oxidized that are contained in the compound, but is preferably 10 to 100 wt% and particularly preferably 20 to 100 wt%. If the content of the nitrogen-containing compound is 10 wt% or more, sufficient heat content can be obtained and the amount of the generated combustion residue can be restricted. The amount of the enhancer used for the inflator is one of several tens time smaller than the amount of the gas generating agent. Therefore, even if any toxic gas is generated, its quantity is extremely trace, and the oxygen balance need not be considered so severely as required for the composition of the gas generating agent.

The enhancer composition for the inflator according to the present invention can further contain an oxidizing agent. An example of the oxidizing agent is at least one selected from oxyacid salt comprising a cation selected from ammonium, alkali metals and alkaline earth metals and an anion, not containing hydrogen, selected from nitric acid, nitrous acid, chloric acid and perchloric acid.

Examples of such oxyacid salts include ammonium salts, alkali metal salts and alkaline earth metal salts of nitric acid, such as ammonium nitrate, sodium nitrate, potassium nitrate, magnesium nitrate and strontium nitrate; ammonium salts, alkali metal salts and alkaline earth metals of nitrous acid, such as ammonium nitrite, sodium nitrite, potassium nitrite, magnesium nitrite and strontium nitrite; ammonium salts, alkali metal salts and alkaline earth metals of chloric acid, such as ammonium chlorate, sodium chlorate, potassium chlorate, magnesium chlorate and barium chlorate; and ammonium salts, alkali metal salts and alkaline earth metal salts of perchloric acid such as ammonium perchlorate, sodium perchlorate, potassium perchlorate, magnesium perchlorate and barium perchlorate.

Particularly preferred among them is strontium nitrate because it has a high combustion temperature and large heat content upon mixing and burning with a nitrogen-containing compound, and produces a small amount of generated combustion residues. Moreover, the strontium compounds in the combustion residue such as SrO and Sr(CO₃)₂ have a high melting point, readily form a slag and can be filtrated easily. Therefore, strontium nitrate satisfies almost completely the requirements for the enhancer composition. Preferred also are potassium nitrate, sodium nitrate, potassium perchlorate, sodium perchlorate, potassium chlorate and sodium chlorate, because they have a high combustion temperature and large heat content upon mixing and burning with the nitrogen-containing compound, and produce much smaller amount of the combustion residues than B/KNO₃.

The content of the oxidizing agent in the composition varies with the kind of the nitrogen-containing compound, but is preferably 5 to 90 wt% and particularly preferably 10 to 80 wt%. If the content of the oxidizing agent is 5 wt% or more, combustibility can be improved, and if it is 90 wt% or less, the amount of the generated combustion residues can be restricted.

The nitrogen-containing compound and the oxidizing agent can be mixed at various mixing ratios. Ordinarily, it is preferred to mix them near the theoretical amounts of complete oxidation. When they are mixed at a ratio near the theoretical amounts of complete oxidation, toxic gases such as CO and NOx are not easily generated and the heat content reaches the maximum.

Furthermore, a binder can be blended to the enhancer composition for the inflator according to the present invention. Such a binder is at least one member selected from the group consisting of cellulose derivatives such as carboxymethyl cellulose sodium, hydroxyethyl cellulose, hydroxypropyl cellulose, cellulose acetate, nitrocellulose and microcrystalline cellulose; organic binders such as starch, polyvinyl alcohol, polyacrylamide and calcium stearate; and inorganic binders such as molybdenum disulfide, sodium silicate. Among them, carboxymethyl cellulose sodium is particularly preferred because it is safe during production and is easy to handle.

The content of the binder in the composition is preferably 0.1 to 30 wt%, and particularly preferably 0.5 to 15 wt%. If the content of the binder is not less than 0.1 wt%, the forming processablity can be improved, and if it is not greater than 30 wt%, the combustiblity is not lowered.

Furthermore, the slag-forming agent can be blended to the enhancer composition for the inflator according to the present invention. The slag-forming agent is at least one member selected from natural clays of a bentonite type and a kaolin type containing aluminosilicates as the principal component, an artificial clay such as a synthetic mica, a synthetic kaolinite and synthetic scumetite, nitrides and carbides. Such a slag-forming agent is preferably acid clay, talc, bentonite, diatomaceous earth, kaolin, silica, alumina, silicon nitride, silicon carbides and hydrotalcite. Incidentally, since strontium nitrate has originally slag-forming capability, the slag-forming agent needs not be added to impart ordinary slag-forming capability unless it needs be particularly strengthened.

The content of the slag-forming agent in the composition is preferably 1 to 15 wt% and particularly preferably 3 to 10 wt%. If the content of the slag-forming agent is not less than 1 wt%, desired slag forming performance can be imparted, and if it is not greater than 15 wt%, combustibility is not much lowered.

The enhancer composition for the inflator according to the present invention can be produced by a dry process which comprises a step of mixing the nitrogen-containing compound, the oxidizing agent, the binder and the slag-forming agent in the powder form, or a wet process which comprises a step of mixing them in the presence of water or an organic solvent.

The enhancer composition for the inflator according to the present invention may be molded into a suitable shape, whenever necessary, such as powder, granules, pellet, hole-free extruded pellet, single-hole extruded pellet, multi-hole extruded pellet, and so forth. The enhancer composition, once molded, may be crushed into powder or granules and can be used in such a form. The enhancer composition in such a form can improve its density much more than when powder is merely mixed under the dry state, and can improve volume efficiency. Because the ignition property and the degree of vigorousness of combustion vary with the molding shape, a suitable shape that most satisfies required performance may be selected. Hereinafter, an example of the production method of the enhancer composition for the inflator according to the present invention will be described.

### (Powder Composition)

The powder composition can be obtained by mixing the starting materials by a ball mill mixer for about one hour.

### (Granule Composition)

The granule composition can be produced by adding, to the starting materials, about 5 to about 50 wt%, on the basis of the total amount of the starting materials, of a solvent such as water, mixing them by a slurry mixer for about one hour, granulating the slurry by a metal mesh, or the like, and drying the resulting granule.

### (Extruded Pellet Type Composition)

A mass of the composition is prepared by adding 10 to 30 wt% of water on the basis of the total amount to the starting materials and kneading the mixture. The sequence of mixing is not particularly limited, and the sequence that can achieve a more uniform mixing state or the sequence that can ensure the highest safety for the production is selected. After the excessive moisture is removed, whenever necessary, the composition mass is extruded at a pressure of 40 to 140 kg/cm² by a extrusion mold to obtain a string-like mold. Before the surface of the string-like mold is dried, the mold is cut into a predetermined length by the cutter and dried to obtain the composition.

The enhancer composition for the inflator according to the present invention can be applied to an inflator system installed in automobiles, airplanes, etc, for protecting human bodies. This inflator system includes a module case which accommodates therein the inflator and the air bag, a judging circuit, a sensor, and so forth. Some of the compositions of the present invention have properties sufficient enough to function as the gas generating agent used for the inflator. Therefore, when the composition of the present invention is used as the gas generating agent, great merits can be obtained in the production process and the cost of production by using the enhancer having the same composition and the same shape as those of the composition.

### Examples

Hereinafter, the present invention will be explained more concretely with reference to Examples and Comparative Example thereof. However, these Examples are merely illustrative and do not whatsoever limit the scope of the invention.

### Examples 1 to 18 and Comparative Example 1

Enhancer compositions having the compositions shown in Tables 1 and 2, respectively, were produced. Heat of combustion (experimental value and calculated value), combustion temperature, theoretical residue amount and theoretical gas generation amount were determined for each of these compositions. The theoretical residue amount represents the residue amount generated from a composition of 1 gram, and the theoretical gas generation amount represents the mole number of the gas generated from a composition of 1 gram. Comparative Example 1 illustrates the value of B/KNO₃. Since B/KNO₃ usually contains a small amount of a binder, a composition containing LAMINAC is illustrated, by way of example. The result was shown in Tables 1 and 2.

It was confirmed that the compositions of Examples 1 to 18 had in essence an extremely small theoretical residue amount and even if the residue was discharged outside the inflator, its weight was slight. When strontium nitrate was used for the oxidizing agent, the combustion residue was also a high melting compound of strontium oxide, or the like, and such a residue could be easily collected by a filter or a coolant and hardly turned to a mist.

In contrast, about 90% by weight of the composition of Comparative Example 1 turned to the combustion residue. The combustion temperature was considerably high and yet the melting point and the boiling point of the combustion residue were low. It was thus clarified that the major proportion the combustion residue were highly possibly discharged outside the inflator.

### Example 19:

Water in the amount corresponding to 15 parts by weight of the total amount of the composition was added to 35 parts by weight of nitroguanidine, and the mixture was mixed and kneaded. Separately, 50 parts by weight of strontium nitrate, 5 parts by weight of acid clay and 10 parts by weight of carboxymethyl cellulose sodium were dry mixed. This mixture was added to the wet mixture described above and was further kneaded. The kneaded mixture was passed through a mold having an outer diameter of 2.5 mm and an inner diameter of 0.8 mm and was extruded at a pressure of 80 kg/cm² to produce a single-hole cylindrical string mold. The string mold was cut by a cutter to a length of 2.12 mm and was sufficiently dried to obtain an enhancer composition for the inflator.

The combustion test was carried out using this composition as a gas generating agent and also as an enhancer. This combustion test was conducted at room temperature inside a 60-liter tank using 41.9 g of the gas generating agent and 2.5 g of the enhancer. The tank maximum pressure was 2.02 kg/cm² and the maximum pressure reaching time was 43.95 msec. As a result, extremely excellent combustion characteristics could be observed without any ignition delay at all. The mist amount inside the tank was 504 mg and the interior of this tank was extremely clean. When 41.9 g of the gas generating agent (composition of the present invention) and 1 g of the enhancing agent (B/KNO₃/LAMINAC) were used, the tank maximum temperature was 2.06 kg/cm² and the maximum pressure reaching time was 52.5 msec. The mist amount inside the tank was 917 mg. It was confirmed from the result of this combustion test that the composition of the present invention could reduce the mist amount without exerting any adverse influences on combustion performance.

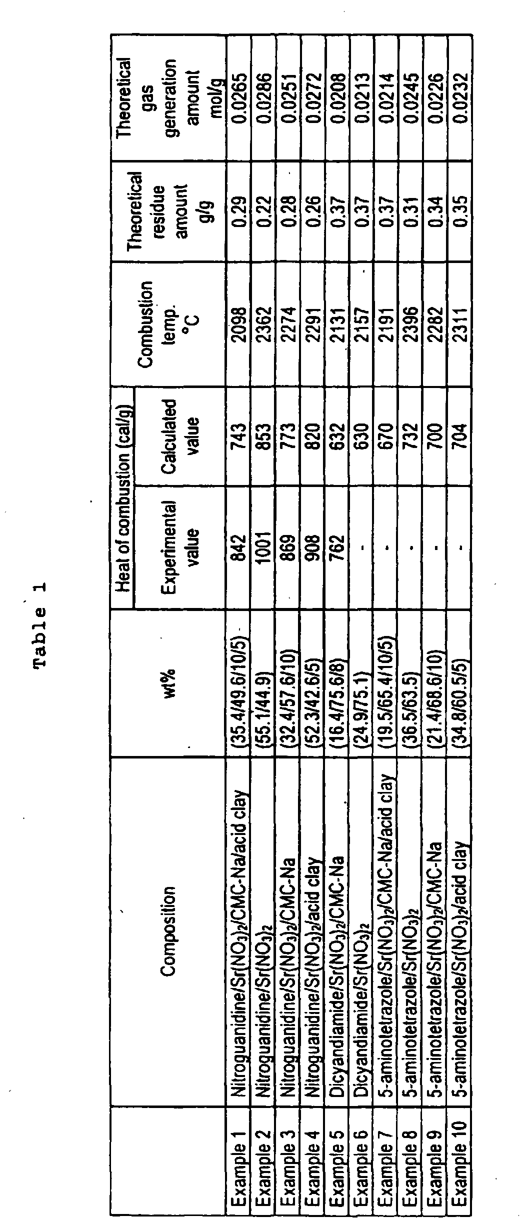

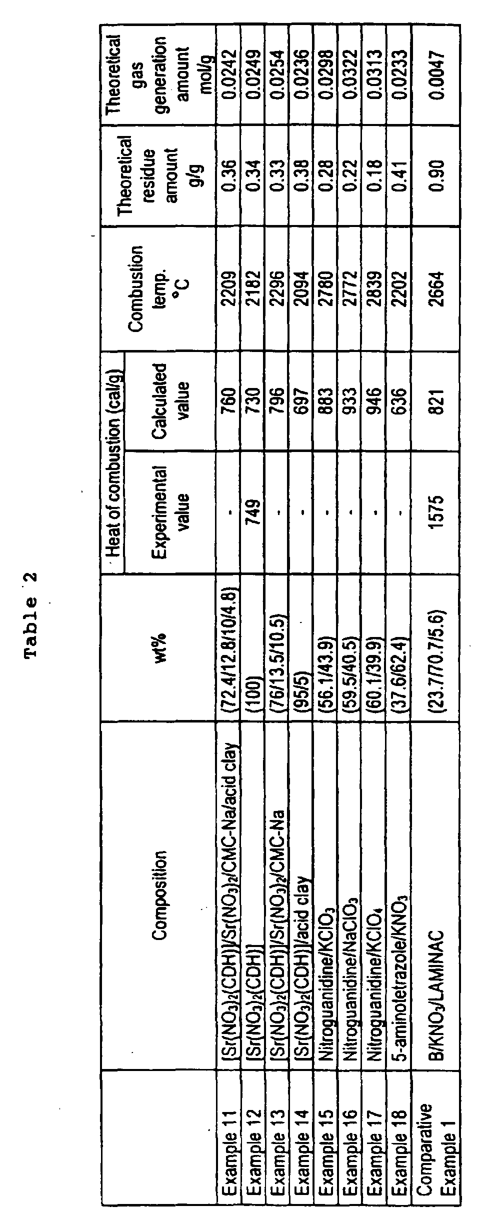

## Claims

1. An enhancer composition for an inflator, containing a nitrogen-containing compound.

2. A composition according to claim 1, wherein the nitrogen content is at least 40 wt% on the basis of the sum of C, H and N in the molecules of said nitrogen-containing compound.

3. A composition according to claim 1, wherein said nitrogen-containing compound is at least one member selected from the group consisting of guanidine derivatives, tetrazole derivatives, bitetrazole derivatives, azodicarbonamide, trihydrazinotriazine, carbohydrazide complexes, hydrazine complexes, oxalylhydrazide and its complexes, and dicyanamide salts.

4. A composition according to claim 1, which further comprises at least one of an oxidizing agent, a binder and a slag-forming agent.

5. A composition according to claim 4, wherein said oxidizing agent is at least one member selected from the group consisting of oxyacid salts comprising a cation selected from ammonium, alkali metals and alkaline earth metals and an anion not containing hydrogen and selected from nitric acid, nitrous acid, chloric acid and perchloric acid.

6. A composition according to claim 4, wherein said binder is at least one member selected from the group consisting of cellulose derivatives, starch, polyvinyl alcohol, polyacrylamide, calcium stearate, molybdenum disulfide and sodium silicate.

7. A composition according to claim 4, wherein said slag-forming agent is at least one member selected from the group consisting of naturally occurring clay consisting principally of aluminosilicates, artificial clay, nitrides and carbides.

8. An inflator system using said enhancer composition according to claim 1.

9. An air bag system comprising a gas generator including said enhancer composition according to claim 1, an impact sensor, control means for inputting a sensing signal and outputting an operation signal to ignition means of said gas generator, and an air bag.

10. A gas generator for an air bag comprising said enhancer composition according to claim 1.

11. A gas generator according to claim 10 comprising a squib and an enhancer composition loaded to the front surface of said squib.

12. An application using said enhancer composition according to claim 1 for a gas generator for an air bag.

13. A method of igniting a gas generating agent inside a gas generator by using said enhancer composition according to claim 1.
